# FASCICULE DE BREVET EUROPEEN

(11) **EP 2 354 417 B1**
(45) Date de publication et mention de la délivrance du brevet: **11.09.2013**
(21) Numéro de dépôt: 11151723.1
(22) Date de dépôt: 21.01.2011
(51) Int. Cl.: E06B 3/54, E04F 13/08, F16B 5/00, F16B 12/20

(54) **Fixation d'un support de liaison sur le bord d'un panneau par serrage dans une rainure contre-dépouillée**
Anbringung eines Verbindungsstücks an einer Paneelkante mittels Klemmung in einer hinterschnittenen Nut
Attachment of a connecting piece to a panel edge via clamping means in an undercut groove

(30) Priorité: 22.01.2010 FR 1050423
(43) Date de publication de la demande: 10.08.2011
(73) Titulaire: Saint-Gobain Glass France, 92400 Courbevoie (FR); Adler S.A.S., 77230 Moussy Le Neuf (FR)
(72) Inventeur: Levasseur, Fabien, 60150 Longueil Annel (FR); Swiderski, Christophe, 02700 Amigny Rouy (FR); Nugue, Jean-Clément, 60260 Lamorlaye (FR); Bourgain, Eric, 75017 Paris (FR); Masson, Jean-Jacques, 94120 Fontenay Sous Bois (FR)
(74) Mandataire: Bregal, Laurence

(56) Documents cités:
- EP-A1- 0 376 840
- EP-A2- 0 314 120
- DE-A1- 2 460 880
- DE-U1-202005 003 657

## Description

La présente invention a trait à un support de liaison destiné à être fixé sur un panneau, en particulier un panneau en verre, ainsi qu'à un procédé de fixation d'un tel support de liaison sur un panneau. L'invention a également trait à un ensemble, notamment un ensemble de porte en verre, comprenant un panneau et une structure reliés l'un à l'autre par une liaison mécanique.

Un ensemble de porte en verre comprend un panneau de porte transparent, formé par un vitrage simple, feuilleté ou multiple, qui est relié à un cadre de porte par une liaison pivot. Le panneau de porte est classiquement articulé sur le cadre de porte au moyen de charnières métalliques, qui sont solidarisées avec le panneau au voisinage d'un de ses chants. Des techniques connues d'assemblage de charnières métalliques avec un panneau de porte en verre comprennent le perçage ou le pinçage du vitrage. Ces deux techniques connues imposent que les charnières, qui ne sont pas transparentes, reposent sur les deux faces principales du panneau de porte à distance du chant du panneau, ce qui a pour conséquences de diminuer le clair de vue de la porte et de nuire à l'unité esthétique de l'ensemble de porte.

Il est par ailleurs connu de WO-A-2006/054011 de ménager, dans les chants d'un panneau en verre, des rainures destinées à recevoir des éléments de liaison de ce panneau avec des panneaux analogues ou avec une structure porteuse, par exemple pour la réalisation de parois ou de mobiliers en verre. Dans ce dispositif connu, les éléments de liaison d'un panneau s'étendent sur toute la longueur des chants de celui-ci et sont immobilisés dans le plan du panneau lors de son assemblage avec d'autres panneaux analogues, par entretoisement des axes des éléments de liaison des différents panneaux. De tels éléments de liaison ne fournissent toutefois pas un ancrage suffisamment rigide pour la mise en place de liaisons mobiles, notamment de type pivot ou roulement, entre le panneau et une structure. En particulier, de tels éléments de liaison (c.f. aussi EP 0376840 A1 ne sont pas utilisables pour l'articulation d'une porte en verre.

C'est à ces inconvénients qu'entend plus particulièrement remédier l'invention en proposant un support de liaison destiné à être fixé sur un panneau, notamment un panneau en verre, qui permet de préserver le clair de vue et l'esthétique du panneau, tout en formant un socle robuste pour la mise en place d'une liaison entre le panneau et une structure, notamment une liaison mobile de type pivot ou roulement.

A cet effet, l'invention a pour objet un support de liaison destiné à être fixé sur un panneau comportant une rainure qui débouche en surface du panneau par une ouverture, ce support de liaison comprenant une clavette dont une extrémité est adaptée pour être logée dans la rainure, l'extrémité de la clavette étant apte à coopérer avec au moins une surface de rétention formant obstacle à l'extraction de l'extrémité hors de la rainure à travers l'ouverture, **caractérisé en ce qu**'il comprend des moyens de traction de la clavette aptes à placer et maintenir l'extrémité de la clavette, lorsqu'elle est logée dans la rainure, dans une position de verrouillage dans laquelle l'extrémité de la clavette est en compression contre la surface de rétention, l'extrémité étant déformable plastiquement contre les bords de la rainure lors du passage d'une position de repos, dans laquelle l'extrémité est reçue dans la rainure sans interaction avec les bords de celle-ci, à ladite position de verrouillage.

Un tel support de liaison permet d'obtenir une fixation sans degré de liberté, rigide et particulièrement discrète, du support sur un panneau, par verrouillage de la clavette du support dans une rainure du panneau. En particulier, un tel support de liaison peut constituer une charnière de porte quasi-invisible, qui n'empiète pas sur les surfaces principales du panneau de porte.

Selon d'autres caractéristiques avantageuses d'un support de liaison conforme à l'invention, prises isolément ou selon toutes les combinaisons techniquement possibles :
- dans la position de verrouillage, l'extrémité de la clavette est en compression contre deux surfaces de rétention, formées chacune par un bord latéral de la rainure, au moins une surface de rétention étant inclinée par rapport à un plan moyen du panneau de manière à se rapprocher de l'autre surface de rétention en direction de l'ouverture, selon un angle compris entre environ 10° et 40° ;
- les moyens de traction comprennent au moins une vis propre à coopérer avec un alésage taraudé de la clavette et des moyens élastiques de poussée de la vis à l'écart du panneau ;
- les moyens de traction comprennent au moins une came excentrique qui coopère avec la clavette ;
- le support de liaison comprend un profilé qui loge les moyens de traction ;
- la clavette et le profilé sont de forme allongée selon une direction longitudinale du support de liaison et les moyens de traction sont aptes à appliquer un effort de traction sur plusieurs portions de la clavette distribuées selon la direction longitudinale du support de liaison ;
- la clavette comporte une première extrémité destinée à être logée dans la rainure et une deuxième extrémité destinée à coopérer avec les moyens de traction ;
- la première extrémité de la clavette est constituée en un matériau plastique, alors que la deuxième extrémité de la clavette est constituée en un matériau métallique ;
- la clavette est monobloc et constituée en un matériau de module d'élasticité voisin de celui du matériau constitutif de la surface de rétention, notamment en aluminium pour une surface de rétention en verre, la première extrémité de la clavette comportant des ailettes déformables plastiquement par contact avec les bords de la rainure ;
- le support de liaison est destiné à être fixé sur un panneau comportant au moins un substrat en matériau fragile, notamment en verre, la rainure étant pratiquée au moins partiellement dans le substrat en matériau fragile.

L'invention a également pour objet un dispositif de fixation d'un support de liaison sur un panneau, ce dispositif comprenant, d'une part, une rainure pratiquée dans le panneau, qui débouche en surface du panneau par une ouverture, et, d'autre part, une clavette appartenant au support de liaison, qui comporte une extrémité adaptée pour être logée dans la rainure, la rainure comportant au moins une surface de rétention formant obstacle à l'extraction de l'extrémité de la clavette hors de la rainure à travers l'ouverture, ce dispositif de fixation comprenant en outre des moyens de traction de la clavette, qui sont aptes à placer et maintenir l'extrémité de la clavette dans une position de verrouillage, dans laquelle l'extrémité de la clavette est en compression contre la surface de rétention de telle sorte que le support de liaison est verrouillé sans degré de liberté par rapport au panneau.

Un autre objet de l'invention est un ensemble comprenant un panneau et une structure reliés l'un à l'autre par une liaison mécanique, le panneau comportant une rainure qui débouche en surface du panneau par une ouverture, cet ensemble comprenant un support de liaison tel que décrit ci-dessus, qui est verrouillé sans degré de liberté par rapport au panneau par l'intermédiaire de l'extrémité de la clavette, laquelle est logée dans la rainure et maintenue dans la position de verrouillage par les moyens de traction. Cet ensemble peut comprendre au moins deux supports de liaison dont les extrémités de clavettes sont logées dans la même rainure du panneau.

Un tel ensemble peut être un ensemble de porte pivotante, de vantelle ou analogue, dans lequel le panneau et la structure sont reliés l'un à l'autre par une liaison pivot d'axe parallèle à la direction longitudinale de la rainure du panneau, le support de liaison portant au moins un organe constitutif de la liaison pivot propre à coopérer avec un organe complémentaire porté par la structure.

En variante, un tel ensemble peut être un ensemble de porte coulissante ou analogue, dans lequel le panneau et la structure sont reliés l'un à l'autre par une liaison de roulement d'axe parallèle à la direction longitudinale de la rainure, le support de liaison portant au moins un organe de roulement propre à coopérer avec un organe de roulement complémentaire porté par la structure.

Enfin, l'invention a pour objet un procédé de fixation d'un support de liaison tel que décrit précédemment sur un panneau comportant une rainure qui débouche en surface du panneau par une ouverture, ce procédé comprenant des étapes dans lesquelles :
- on introduit l'extrémité de la clavette dans la rainure ;
- on actionne les moyens de traction de manière à placer et maintenir l'extrémité de la clavette dans la position de verrouillage.

Les caractéristiques et avantages de l'invention apparaîtront dans la description qui va suivre de deux modes de réalisation d'un support de liaison et d'un ensemble selon l'invention, donnée uniquement à titre d'exemple et faite en se référant aux dessins annexés dans lesquels :
- la figure 1 est une vue en élévation d'un ensemble de porte pivotante comprenant un panneau de porte et deux supports de liaison pivot conformes à un premier mode de réalisation de l'invention ;
- la figure 2 est une vue en perspective du détail II de la figure 1 ;
- la figure 3 est une vue à plus grande échelle selon la flèche III de la figure 2 ;
- la figure 4 est une vue en perspective schématique montrant la coopération entre le panneau et le support de liaison de la figure 2, au niveau du plan de coupe IV de la figure 2, en configuration non verrouillée du support de liaison sur le panneau ;
- la figure 5 est une vue analogue à la figure 4, en configuration verrouillée du support de liaison sur le panneau ;
- la figure 6 est une vue analogue à la figure 4 montrant la coopération entre un panneau et un support de liaison conforme à un deuxième mode de réalisation de l'invention, en configuration non verrouillée du support de liaison sur le panneau ;
- la figure 7 est une vue analogue à la figure 6, en configuration verrouillée du support de liaison sur le panneau ;
- la figure 8 est une vue en perspective partielle d'une variante du panneau représenté sur les figures 1 à 7 ; et
- la figure 9 est une coupe à plus grande échelle selon le plan IX de la figure 8.

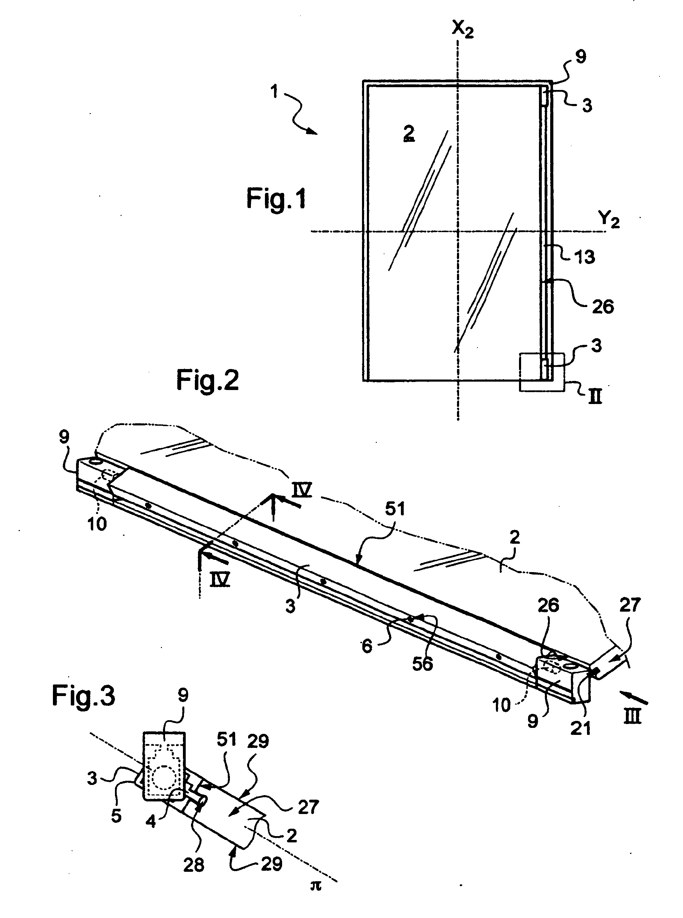

L'ensemble de porte 1 représenté sur la figure 1 comprend un panneau de porte 2 et un cadre de porte 9, reliés l'un à l'autre par une liaison pivot. Le panneau 2 est formé par une vitre monolithique en verre trempé de forme rectangulaire, dont on note X₂ une direction de longueur et Y₂ une direction de largeur. Comme montré sur la figure 1, la liaison pivot entre le panneau 2 et le cadre 9, d'axe parallèle à la direction longitudinale X₂ du panneau, est supportée par deux supports de liaison 3, ou charnières, prévus respectivement en parties haute et basse d'un chant longitudinal 26 du panneau. Les deux supports de liaison 3 sont identiques l'un à l'autre.

Comme montré sur la figure 2, chaque support de liaison 3 porte deux axes 10, positionnés chacun au voisinage d'une extrémité du support de liaison et destinés à coopérer avec des organes complémentaires portés par le cadre de porte 9. Plus précisément, l'axe 10 situé au niveau de l'extrémité inférieure du support de liaison 3 est destiné à servir de pivot, alors que l'axe 10 situé au niveau de l'extrémité supérieure est un axe rétractable destiné à être inséré dans une crapaudine portée par le cadre 9.

Pour la fixation de chaque support de liaison 3 sur le panneau 2, le panneau comporte dans son chant longitudinal 26 une rainure 21 de forme allongée, dont la direction longitudinale est la direction X₂ du panneau. La rainure 21 s'étend sur toute la longueur du chant 26 et débouche en surface du panneau 2 à la fois au niveau du chant longitudinal 26, par une ouverture longitudinale 23, et au niveau de chacun des chants transversaux 27 du panneau qui sont adjacents au chant 26, par une ouverture transversale 28. Comme visible sur les figures 3 à 5, la rainure 21 est ménagée dans une portion centrale du chant longitudinal 26, de sorte qu'elle est bordée de part et d'autre par deux portions 26A et 26B de surface restante du chant 26.

De manière avantageuse, la rainure 21 est pratiquée dans le chant 26 du panneau 2 avant la trempe de celui-ci, par meulage au moyen d'un outil comprenant des disques abrasifs rotatifs montés sur une tête pivotante ou inclinable. Il est ainsi possible, en inclinant la tête de l'outil par rapport à la direction Y₂ normale au chant 26 du panneau, et en combinant ce mouvement d'inclinaison avec un mouvement d'avance, d'obtenir à la suite de plusieurs passes d'usinage le profil de la rainure 21 montré sur les figures 3 à 5.

Selon ce profil, la rainure 21 a une section transversale globalement en forme de U, ouverte au niveau de l'ouverture longitudinale 23, le fond et les branches du U étant formés respectivement par un fond 22 de la rainure et par deux bords latéraux 24 de la rainure qui s'étendent entre le fond 22 et l'ouverture 23. On note π un plan moyen du panneau 2, c'est-à-dire un plan médian parallèle aux faces principales 29 du panneau. Le plan π est un plan de symétrie pour la rainure 21. Comme visible sur les figures, le fond 22 de la rainure est globalement plan et sensiblement perpendiculaire à la direction Y₂ du panneau, tandis que chaque bord latéral 24 comporte une première partie incurvée 24A, au voisinage du fond 22, qui présente une concavité tournée vers l'intérieur de la rainure 21, et une deuxième partie plane 24B, au voisinage de l'ouverture 23, qui est sensiblement parallèle à la direction Y₂ du panneau.

La partie incurvée 24A de chaque bord latéral 24 définit, au voisinage de la partie plane 24B, une surface de rétention 25 qui est inclinée par rapport au plan moyen π du panneau 2 selon un angle α de l'ordre de 20°, de manière à se rapprocher de la surface de rétention 25 définie par l'autre bord latéral 24 en allant vers l'ouverture 23. Ainsi, les deux surfaces de rétention 25 formées par les bords latéraux 24 de la rainure convergent l'une vers l'autre en direction de l'ouverture 23. En variante, l'angle α d'inclinaison de chaque surface de rétention 25 par rapport au plan π peut avoir une valeur différente de 20°, de préférence comprise entre environ 10° et 40°. En vue d'éviter les pics de contraintes dans la rainure 21, les zones de jonction entre le fond 22 et la partie incurvée 24A de chaque bord latéral 24, d'une part, et entre la partie incurvée 24A et la partie plane 24B de chaque bord latéral 24, d'autre part, sont avantageusement arrondies.

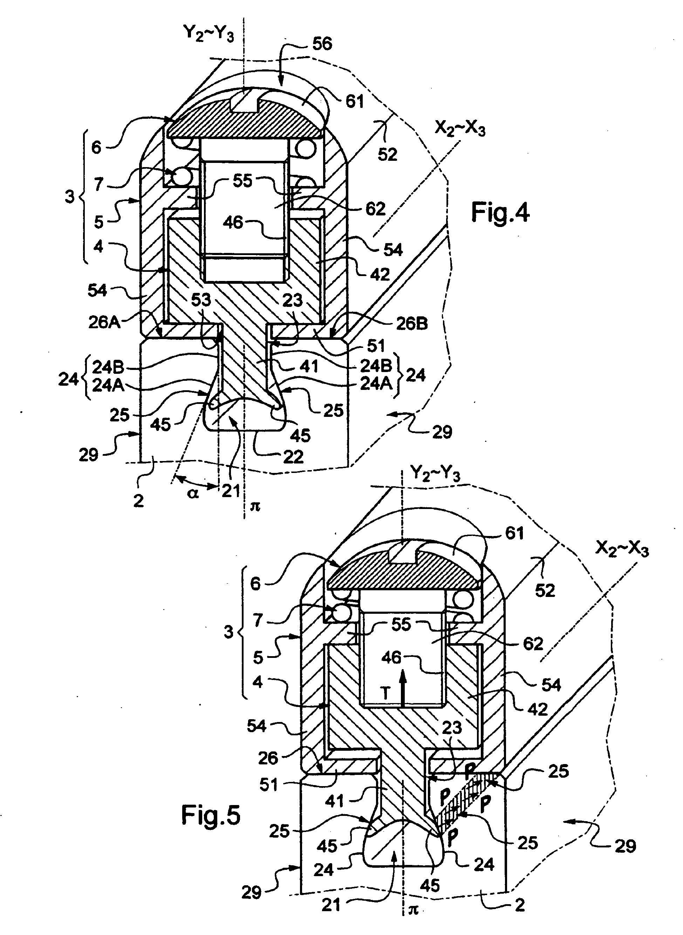

Comme bien visible sur les figures 4 et 5, chaque support de liaison 3 de l'ensemble 1 comprend une clavette 4 et un profilé 5, qui ont tous deux une forme allongée selon une direction longitudinale X₃ du support de liaison. La clavette 4 et le profilé 5 ont sensiblement la même longueur selon la direction X₃, cette longueur étant inférieure à celle de la rainure 21 selon la direction X₂ du panneau. La section transversale du profilé 5 est sensiblement quadrilatère, comportant une paroi 51 destinée à venir en appui contre le chant 26 du panneau 2, une paroi 52 opposée à la paroi 51 et deux parois latérales 54 qui relient les parois 51 et 52. La section transversale de la clavette 4 est globalement en forme de T. Une extrémité 42 de la clavette, qui forme la barre horizontale du T, est reçue dans le volume intérieur du profilé 5, alors qu'une extrémité 41 de la clavette, qui forme la barre verticale du T, passe à travers une ouverture 53 percée dans la paroi 51 du profilé 5 et fait saillie hors du profilé.

La clavette 4 est mobile en translation par rapport au profilé 5 selon une direction Y₃ du support de liaison, qui est une direction perpendiculaire à la paroi 51. Le mouvement de translation de la clavette 4 selon la direction Y₃ est guidé par les parois latérales 54 du profilé et limité par deux butées transversales, qui sont formées d'une part par la paroi 51 et d'autre part par deux nervures internes 55 du profilé 5 parallèles à la paroi 51 et en saillie chacune par rapport à l'une des parois latérales 54. Dans ce mode de réalisation, pour chaque support de liaison 3, le profilé 5 est constitué en aluminium de dureté relativement élevée et la clavette 4, qui est monobloc, est constituée en aluminium de dureté plus faible que celle du profilé 5. Ainsi, le profilé 5 et la clavette 4 peuvent être fabriqués facilement par extrusion. En variante, le profilé 5 peut être constitué en tout matériau suffisamment rigide autre que l'aluminium.

L'extrémité 41 de la clavette 4, qui fait saillie par rapport au profilé 5, est adaptée pour être logée dans la rainure 21 du panneau 2 sans possibilité d'en être extraite à travers l'ouverture 23. A cet effet, l'extrémité 41 comporte deux ailettes 45, agencées l'une par rapport à l'autre de manière à former un V dont l'ouverture est tournée à l'opposé de l'extrémité 42 de la clavette. Les ailettes 45 sont déformables plastiquement et conformées pour coopérer chacune avec une surface de rétention 25 de la rainure 21, de telle sorte que les deux surfaces de rétention 25 forment un obstacle à l'extraction de l'extrémité 41 hors de la rainure à travers l'ouverture 23.

Dans ce mode de réalisation, comme la rainure 21 s'étend sur toute la longueur du chant longitudinal 26 du panneau, les extrémités 41 des clavettes des deux supports de liaison 3 de l'ensemble 1 sont destinées à être logées toutes les deux dans la même rainure 21, l'une en partie haute et l'autre en partie basse du chant 26. En variante, deux rainures distinctes peuvent être prévues en parties haute et basse du chant 26 pour recevoir chacune l'extrémité 41 de la clavette de l'un des supports de liaison 3.

Chaque support de liaison 3 de l'ensemble 1 comprend également des moyens de traction de la clavette 4 qui, dans ce mode de réalisation, comprennent une pluralité de vis 6, réparties selon la direction longitudinale X₃ du support de liaison 3 comme visible sur la figure 2 et associées chacune à un ressort de compression 7. Plus précisément, comme montré sur les figures 4 et 5, chaque vis 6 comporte une tête 61 et une tige filetée 62. La tige filetée 62 coopère avec un alésage taraudé 46, ménagé dans l'extrémité 42 de la clavette avec son axe dirigé selon la direction Y₃ du support de liaison 3. Le ressort 7 associé à la vis 6 est intercalé entre les nervures 55 du profilé 5 et la tête de vis 61, de manière à repousser élastiquement la tête de vis 61 en direction de la paroi 52 du profilé 5. Tel que représenté sur les figures, le ressort de compression 7 est un ressort à spires. En variante, il peut être formé par une rondelle Belleville, un boudin caoutchouc, ou analogue.

Grâce à cet agencement, chaque couple de vis 6 et ressort 7 est apte, par vissage de la vis 6 dans l'alésage taraudé 46, à exercer sur la clavette 4 un effort local de traction T selon la direction Y₃, dans le sens d'un éloignement de l'extrémité 42 par rapport à la paroi 51 du profilé 5. La paroi 52 du profilé 5 est percée d'orifices 56, agencés chacun à l'aplomb d'une vis 6 de manière à permettre un vissage des vis 6 depuis l'extérieur du profilé. De manière avantageuse, l'extrémité 42 de la clavette 4 est suffisamment rigide pour redistribuer les efforts locaux de traction T sur toute la longueur de la clavette 4.

Dans la configuration montée d'un support de liaison 3 sur le panneau 2, visible sur les figures 4 et 5, la paroi 51 du profilé 5 est en appui contre les portions 26A et 26B du chant 26 et l'extrémité 41 de la clavette 4 est logée dans la rainure 21, l'ouverture 53 du profilé 5 étant positionnée en regard de l'ouverture 23 de la rainure 21. Dans cette configuration montée, la direction longitudinale X₃ du support de liaison 3 est confondue avec la direction longitudinale X₂ du panneau, et la direction Y₃ du support de liaison 3 est confondue avec la direction Y₂ du panneau. De manière avantageuse, le profilé 5 est de même dimension transversale que le chant 26, de sorte qu'il ne dépasse pas latéralement par rapport au chant 26 lorsque le support de liaison est monté sur le panneau.

Lorsqu'un support de liaison 3 est monté mais non verrouillé sur le panneau 2, comme montré sur la figure 4, les vis 6 ne sont pas serrées dans les alésages taraudés 46 et la clavette 4 est dans une position de repos, dans laquelle l'extrémité 42 est en appui contre la paroi 51 du profilé 5 et les ailettes 45 de l'extrémité 41 sont reçues dans la rainure 21 sans interaction avec les bords de celle-ci. A partir de cette position de repos, il est possible, par vissage de chaque vis 6 dans son alésage taraudé 46 à l'encontre de la poussée élastique du ressort 7, d'exercer sur la clavette 4 un effort de traction T dirigé selon la direction Y₃ confondue avec la direction Y₂, dans le sens d'une extraction de l'extrémité 41 hors de la rainure 21, et ainsi de placer et maintenir l'extrémité 41 de la clavette 4 dans une position de verrouillage, visible sur la figure 5. Dans cette position de verrouillage, chacune des deux ailettes 45 de l'extrémité 41 exerce une pression surfacique sur la surface de rétention 25 correspondante de la rainure 21, comme illustré par les flèches P de la figure 5. Lorsque l'extrémité 41 est dans la position de verrouillage, le support de liaison 3 est immobilisé sans degré de liberté par rapport au panneau 2.

En effet, du fait de la compression des ailettes 45 contre les surfaces de rétention 25 inclinées de part et d'autre du plan moyen π, et du coefficient de frottement élevé entre les ailettes 45 et les surfaces de rétention 25, il se produit un effet de coincement bilatéral de la clavette 4 dans la rainure 21. Grâce à ce coincement bilatéral, la clavette 4 est totalement bloquée dans la rainure 21, notamment en translation selon la direction X₂, sans qu'il soit nécessaire de prévoir dans la rainure des butées de blocage en translation. De plus, l'extrémité 42 de la clavette 4 joue le rôle d'un cintre raidisseur, qui assure un verrouillage homogène du support de liaison 3 sur toute sa longueur par rapport au panneau 2.

De manière particulièrement avantageuse, le coincement bilatéral de la clavette 4 dans la rainure 21 permet de verrouiller le support de liaison 3 sur le panneau 2 à l'encontre d'efforts, tendant à déplacer le support de liaison, qui peuvent être jusqu'à deux fois supérieurs à l'effort de traction exercé par les moyens de traction 6-7 sur la clavette 4.

En pratique, l'effort de traction T exercé par les moyens de traction 6-7 sur la clavette 4 est ajusté en fonction de plusieurs paramètres, de manière à garantir que la pression résultante sur chaque surface de rétention 25 est suffisante pour empêcher tout mouvement du support de liaison 3 par rapport au panneau 2 lors de l'utilisation de l'ensemble de porte 1. Les paramètres d'ajustement de l'effort de traction T comprennent, notamment, la dureté du matériau constitutif des ailettes de la clavette, le profil de ces ailettes, le coefficient de frottement à l'interface entre les ailettes de la clavette et les surfaces de rétention, l'angle α d'inclinaison des surfaces de rétention par rapport au plan moyen π du panneau, le niveau d'effort susceptible d'être exercé sur le support de liaison, en particulier lors de la mise en oeuvre de la liaison pivot qu'il supporte. De manière générale, le coefficient de frottement entre l'extrémité de la clavette et les surfaces brutes de meulage du verre est supérieur à 0,2.

La fixation de chaque support de liaison 3 sur le panneau 2 comprend des étapes telles que décrites ci-après.

Tout d'abord, on monte le support de liaison 3 sur le panneau 2. A cet effet, on introduit l'extrémité 41 de la clavette 4 dans la rainure 21 du panneau, à partir de l'une des ouvertures transversales 28, puis on déplace l'extrémité 41 en coulissement dans la rainure 21, selon la direction longitudinale X₂, jusqu'à atteindre l'emplacement souhaité d'implantation du support de liaison 3 sur le panneau 2.

En variante, le panneau 2 peut comporter dans son chant 26 au moins une portion de rainure 20 présentant un profil adapté pour permettre une introduction directe de l'extrémité 41 dans la portion de rainure 20 à travers l'ouverture longitudinale de celle-ci, cette portion de rainure 20 étant reliée à au moins une portion de rainure 21 de profil identique à celui de la rainure 21 décrite précédemment. Dans cette variante, le montage du support de liaison 3 sur le panneau 2 peut s'opérer en introduisant l'extrémité 41 dans la portion de rainure 20 du panneau à partir de l'ouverture longitudinale de la rainure 20, puis en déplaçant l'extrémité 41 en coulissement selon la direction longitudinale du panneau, jusqu'à atteindre l'emplacement souhaité dans l'une des portions de rainure 21 adjacentes à la portion de rainure 20. On note que, dans cette variante, la rainure 21 peut ne pas déboucher dans les chants transversaux 27 du panneau.

Une fois le support de liaison 3 monté sur le panneau 2, on procède à son verrouillage par rapport au panneau. Pour cela, on plaque la paroi 51 du profilé 5 en appui contre le chant 26, et on visse chacune des vis 6 dans l'alésage taraudé 46 correspondant, à travers l'orifice 56 du profilé 5 prévu à cet effet. Le vissage des vis 6 génère un effort de traction T sur la clavette 4, de sorte qu'elle est déplacée en translation selon la direction Y₃, jusqu'à la venue en appui des ailettes 45 de l'extrémité 41 en compression contre les surfaces de rétention 25 de la rainure 21, avec une pression de verrouillage P appropriée. De manière avantageuse, on peut prévoir une butée de fin de vissage de chaque vis 6 dans son alésage taraudé 46, l'arrivée en butée de la vis 6 étant le signe de l'obtention de la pression de verrouillage P appropriée.

Lors du vissage des vis 6, il s'opère tout d'abord un rattrapage de jeu entre les ailettes 45 et les surfaces de rétention 25 de la rainure 21, puis une flexion plastique progressive des ailettes 45 contre les surfaces 25. Grâce au profil spécifique en forme de harpon de l'extrémité 41 comprenant deux ailettes 45 déformables, la forme de l'extrémité 41 s'adapte de manière naturelle à la forme de la rainure 21 par formage plastique. La pression locale sur le verre à l'intérieur de la rainure 21 reste ainsi limitée, ce qui réduit les risques de casse du verre ou d'arrachement de la clavette 4 hors de la rainure en cas de sollicitation excessive de la clavette.

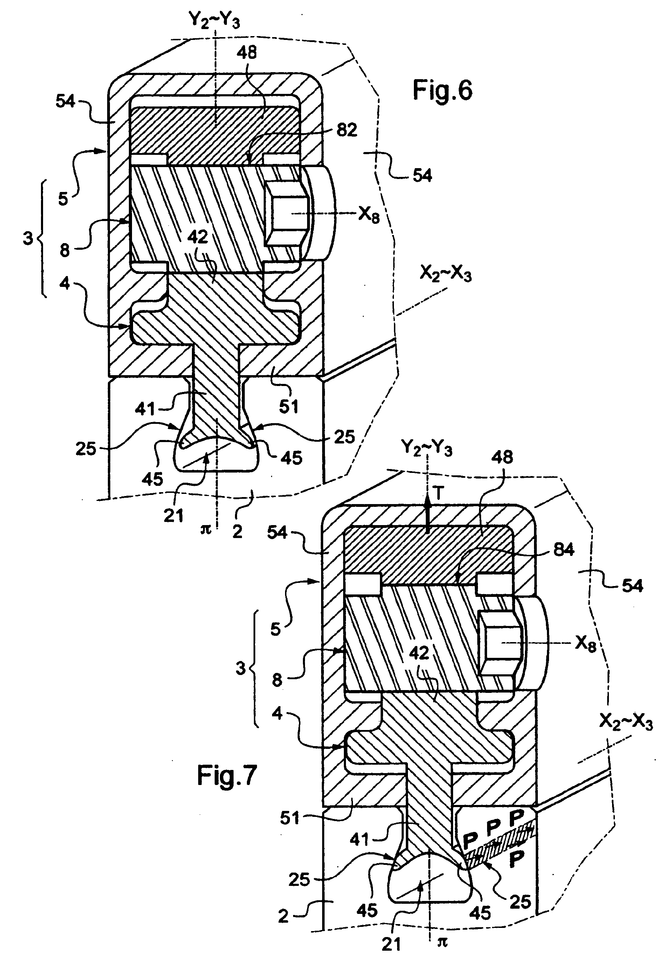

Dans le deuxième mode de réalisation représenté sur les figures 6 et 7, les éléments analogues à ceux du premier mode de réalisation portent des références identiques. Ce deuxième mode de réalisation diffère du premier mode de réalisation en ce que les moyens de traction du support de liaison 3 mettent en jeu un dispositif de cames excentriques réparties selon la direction longitudinale du support de liaison 3, au lieu d'un dispositif de vis et ressorts. Plus précisément, chaque came excentrique 8 est agencée dans le profilé 5 du support de liaison 3 et coopère avec une partie arrière 48 de l'extrémité 42 de la clavette 4. La came 8 est apte à être tournée au moyen d'une clé, autour d'un axe X₈ perpendiculaire aux parois 54 du profilé 5.

Dans la configuration montée mais non verrouillée du support de liaison 3 sur le panneau 2, montrée sur la figure 6, une surface de came 82 de faible diamètre de la came excentrique 8 coopère avec la partie 48. La clavette 4 est alors dans une position de repos, dans laquelle l'extrémité 42 de la clavette est en appui contre la paroi 51 du profilé 5 et les ailettes 45 de l'extrémité 41 sont reçues dans la rainure 21 sans interaction avec les bords de celle-ci. A partir de cette position de repos, il est possible, par une rotation de la came 8 autour de l'axe X₈, d'exercer sur la clavette 4 un effort de traction T dirigé selon la direction Y₃ confondue avec la direction Y₂, dans le sens d'une extraction de l'extrémité 41 hors de la rainure 21.

En particulier, une rotation de 180° de la came 8 autour de l'axe X₈ permet de placer et maintenir l'extrémité 41 de la clavette 4 dans une position de verrouillage, visible sur la figure 7, dans laquelle chacune des deux ailettes 45 de l'extrémité 41 exerce une pression surfacique P sur la surface de rétention 25 correspondante de la rainure 21. En effet, suite à la rotation de 180° de la came 8, c'est une surface de came 84, de diamètre supérieur au diamètre de la surface de came 82, qui coopère avec la partie 48. Le diamètre de la surface périphérique de la came excentrique 8 augmente continûment entre les surfaces 82 et 84. Comme dans le premier mode de réalisation, le support de liaison 3 est immobilisé sans degré de liberté par rapport au panneau 2 lorsque l'extrémité 41 est dans la position de verrouillage.

Comme il ressort des exemples décrits ci-dessus, l'invention permet un verrouillage efficace, selon tous les degrés de liberté, d'un support de liaison sur un panneau. De manière avantageuse, la force de verrouillage P du support de liaison sur le panneau est facilement ajustable, en jouant sur la structure des moyens de traction, en particulier sur la course de vissage et la raideur des ressorts dans le cas d'ensembles vis-ressorts, ou sur la variation de diamètre de la surface de came dans le cas de cames excentriques, de manière à moduler la course de la clavette entre sa position de repos et sa position de verrouillage. La force de verrouillage P peut ainsi être adaptée au cas par cas, en fonction notamment de la liaison supportée par le support de liaison et du chargement qu'elle est susceptible d'engendrer, en fonctionnement, sur le support de liaison. Un support de liaison selon l'invention peut également être facilement adapté pour être implanté sur des panneaux de géométries et de dimensions variées.

Grâce au facteur d'augmentation entre la force de traction T exercée sur la clavette et la force de verrouillage P résultante, un support de liaison selon l'invention peut présenter un encombrement très limité. Cette compacité, associée à l'agencement du support de liaison contre le chant du panneau sans qu'il empiète sur les faces principales 29 du panneau de porte, permet de préserver le clair de vue de la porte en verre et d'améliorer l'esthétique de l'ensemble de porte 1 par rapport aux ensembles de porte en verre de l'état de la technique.

L'invention n'est pas limitée aux exemples décrits et représentés.

En particulier, le panneau 2, sur lequel un support de liaison 3 conforme à l'invention est destiné à être fixé, peut être de toute forme autre que rectangulaire et de tout type autre qu'une vitre monolithique en verre trempé. Notamment, lorsque le panneau 2 est un vitrage, il peut s'agir d'un vitrage feuilleté ou multiple comprenant plusieurs substrats en verre. Dans le cas d'un vitrage feuilleté comprenant deux substrats en verre assemblés au moyen d'un intercalaire de feuilletage polymère, par exemple à base de butyral de polyvinyle (PVB), la rainure 21 de réception de l'extrémité 41 de la clavette peut être ménagée dans une portion centrale du chant du vitrage, de manière à chevaucher les trois composants du vitrage. Chaque substrat en verre du vitrage feuilleté forme alors un bord latéral 24 de la rainure, de sorte que les surfaces de rétention 25 de la rainure sont des surfaces en verre.

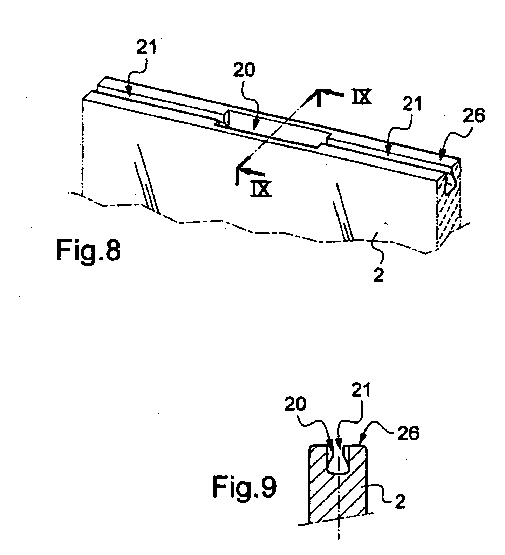

De plus, l'invention a été décrite avec une rainure 21 qui s'étend de manière continue sur toute la longueur d'un chant longitudinal 26 du panneau et qui débouche dans les chants transversaux 27 adjacents au chant 26. En variante, cette rainure 21 peut s'étendre seulement sur une portion de longueur du chant longitudinal 26 et s'arrêter avant de déboucher dans les chants transversaux 27. La rainure 21 peut également être associée à des portions de rainure de profils différents de celui de la rainure 21, comme illustré par exemple sur les figures 8 et 9. Selon encore une autre variante, la rainure 21 de réception de l'extrémité 41 de la clavette peut déboucher en surface du panneau 2 par une ouverture longitudinale qui est située au niveau d'un chant transversal 27, ou même au niveau d'une face principale 29 du panneau, au lieu d'être située sur un chant longitudinal 26.

Dans les exemples précédents, la rainure 21 de réception de l'extrémité 41 de la clavette présente un profil symétrique par rapport au plan moyen π du panneau, ce qui est avantageux pour l'obtention d'un coincement bilatéral de la clavette 4 parfaitement équilibré de part et d'autre du plan π. Toutefois, en fonction des efforts destinés à être appliqués sur le support de liaison 3, il peut être envisagé de donner à la rainure 21 un profil asymétrique, dans lequel les surfaces de rétention 25 ne sont pas inclinées selon un même angle par rapport au plan moyen π du panneau, voire même dans lequel il n'est prévu qu'une seule surface de rétention 25. De plus, les surfaces de rétention 25 ont été décrites précédemment comme étant des surfaces planes mais, selon une variante non représentée de l'invention, la ou chaque surface de rétention peut être une surface courbe. Dans ce cas, l'angle α d'inclinaison de la surface de rétention 25 par rapport au plan π du panneau est l'angle d'inclinaison d'un plan moyen de la surface courbe par rapport au plan π.

Par ailleurs, la clavette 4 du support de liaison peut être monobloc et constituée en tout matériau, notamment métallique, présentant des propriétés de déformation plastique appropriées. De préférence, le matériau constitutif de la clavette 4, ou au moins de son extrémité 41 destinée à coopérer avec les bords de la rainure, est choisi avec un module d'élasticité aussi proche que possible de celui du matériau constitutif du panneau, de manière à minimiser les contraintes dans la rainure. Ainsi, l'utilisation d'une clavette en aluminium est particulièrement avantageuse dans le cas d'un panneau comprenant au moins un substrat en verre, pour obtenir un contact direct entre la clavette et les bords en verre de la rainure, et ainsi minimiser les contraintes dans la rainure, grâce à la faible différence de module d'élasticité entre l'aluminium et le verre. En variante, la clavette 4 peut être constituée en deux matériaux distincts, à savoir un matériau plastique pour l'extrémité 41 destinée à être logée dans la rainure 21 et un matériau métallique pour l'extrémité 42 jouant le rôle de cintre raidisseur. Lorsque l'extrémité 41 de la clavette est en matériau plastique, la présence d'ailettes n'est pas nécessaire car la déformation plastique de l'extrémité 41 contre les bords de la rainure 21 résulte directement des propriétés de son matériau plastique constitutif.

Une construction modulaire est également possible pour un ensemble conforme à l'invention, notamment un ensemble de porte en verre, mettant en jeu non seulement des supports de liaison 3, pour l'articulation de la porte notamment en partie haute et basse, mais également des profils de clavette supplémentaires, de même forme et même matériau constitutif que les clavettes des supports de liaison, pour le remplissage de la rainure 21 entre deux supports de liaison 3, comme illustré par le profil 13 sur la figure 1. Le profil de remplissage 13 permet de combler le jour entre les deux supports 3 et ainsi d'améliorer l'unité esthétique de l'ensemble de porte 1. En outre, la présence de supports de liaison 3 et de profils de remplissage 13 sur toute la longueur du chant du panneau de porte produit un effet anti pince-doigt. Selon une variante avantageuse, un profil de remplissage peut aussi assurer une fonction de centrage des supports de liaison et profils de remplissage les uns par rapport aux autres, par exemple en comportant des encoches d'indexation à leurs extrémités, destinées à coopérer avec des parties correspondantes des supports de liaison et des autres profils de remplissage.

Enfin, un support de liaison 3 conforme à l'invention peut être utilisé pour l'ancrage d'une liaison pivot d'axe horizontal, et non vertical, par exemple pour la réalisation d'ensembles de porte en hayon, d'ensembles de vantelle, ou analogues. Un support de liaison conforme à l'invention peut également être utilisé pour la mise en place d'une liaison, entre un panneau et une structure, autre qu'une liaison pivot, par exemple une liaison de roulement pour la réalisation d'ensembles de porte coulissante ou en accordéon.

## Revendications

1. Support de liaison (3) destiné à être fixé sur un panneau (2) comportant une rainure (21) qui débouche en surface (26) du panneau par une ouverture (23), ce support de liaison (3) comprenant une clavette (4) dont une extrémité (41) est adaptée pour être logée dans la rainure (21), l'extrémité (41) de la clavette étant apte à coopérer avec au moins une surface de rétention (25) formant obstacle à l'extraction de l'extrémité (41) hors de la rainure à travers l'ouverture (23), le support de liaison (3) comprenant des moyens (6, 7 ; 8) de traction de la clavette (4) aptes à placer et maintenir l'extrémité (41) de la clavette, lorsqu'elle est logée dans la rainure (21), dans une position de verrouillage dans laquelle l'extrémité (41) est en compression contre la surface de rétention (25), **caractérisé en ce que** l'extrémité (41) est déformable plastiquement contre les bords de la rainure (21) lors du passage d'une position de repos, dans laquelle l'extrémité (41) est reçue dans la rainure (21) sans interaction avec les bords de celle-ci, à ladite position de verrouillage.

2. Support de liaison selon la revendication 1, **caractérisé en ce que**, dans la position de verrouillage, l'extrémité (41) de la clavette (4) est en compression contre deux surfaces de rétention (25), formées chacune par un bord latéral (24) de la rainure (21), au moins une surface de rétention (25) étant inclinée par rapport à un plan moyen (n) du panneau (2) de manière à se rapprocher de l'autre surface de rétention (25) en direction de l'ouverture (23).

3. Support de liaison selon l'une quelconque des revendications 1 ou 2, **caractérisé en ce que** les moyens de traction comprennent au moins une vis (6) propre à coopérer avec un alésage taraudé (46) de la clavette (4) et des moyens élastiques (7) de poussée de la vis (6) à l'écart du panneau (2).

4. Support de liaison selon l'une quelconque des revendications 1 ou 2, **caractérisé en ce que** les moyens de traction comprennent au moins une came excentrique (8) qui coopère avec la clavette (4).

5. Support de liaison selon l'une quelconque des revendications précédentes, **caractérisé en ce qu'**il comprend un profilé (5) qui loge les moyens de tractions (6, 7 ; 8).

6. Support de liaison selon la revendication 5, **caractérisé en ce que** la clavette (4) et le profilé (5) sont de forme allongée selon une direction longitudinale (X₃) du support de liaison (3), les moyens de traction (6, 7 ; 8) étant aptes à appliquer un effort de traction (T) sur plusieurs portions de la clavette (4) distribuées selon la direction longitudinale (X₃) du support de liaison (3).

7. Support de liaison selon l'une quelconque des revendications précédentes, **caractérisé en ce que** la clavette (4) comporte une première extrémité (41) destinée à être logée dans la rainure (21) et une deuxième extrémité (42) destinée à coopérer avec les moyens de traction (6, 7 ; 8).

8. Support de liaison selon la revendication 7, **caractérisé en ce que** la première extrémité (41) de la clavette (4) est constituée en un matériau plastique, alors que la deuxième extrémité (42) de la clavette (4) est constituée en un matériau métallique.

9. Support de liaison selon la revendication 7, **caractérisé en ce que** la clavette (4) est monobloc et constituée en un matériau de module d'élasticité voisin de celui du matériau constitutif de la surface de rétention (25), notamment en aluminium pour une surface de rétention en verre, la première extrémité (41) de la clavette (4) comportant des ailettes (45) déformables plastiquement par contact avec les bords (24) de la rainure (21).

10. Support de liaison selon l'une quelconque des revendications précédentes, **caractérisé en ce qu'**il est destiné à être fixé sur un panneau (2) comportant au moins un substrat en matériau fragile, notamment en verre, la rainure (21) étant pratiquée au moins partiellement dans le substrat en matériau fragile.

11. Ensemble (1) comprenant un panneau (2) et une structure (9) reliés l'un à l'autre par une liaison mécanique, le panneau (2) comportant une rainure (21) qui débouche en surface (26) du panneau par une ouverture (23), **caractérisé en ce qu'**il comprend un support de liaison (3) selon l'une quelconque des revendications précédentes, le support de liaison (3) étant verrouillé sans degré de liberté par rapport au panneau (2) par l'intermédiaire de l'extrémité (41) de la clavette (4), qui est logée dans la rainure (21) et maintenue dans la position de verrouillage par les moyens de traction (6, 7 ; 8).

12. Ensemble selon la revendication 11, **caractérisé en ce qu'**il comprend au moins deux supports de liaison (3) selon l'une quelconque des revendications 1 à 10 dont les extrémités (41) de clavettes (4) sont logées dans la même rainure (21) du panneau (2).

13. Ensemble selon l'une quelconque des revendications 11 ou 12, notamment ensemble de porte, de vantelle ou analogue, **caractérisé en ce que** le panneau (2) et la structure (9) sont reliés l'un à l'autre par une liaison pivot d'axe parallèle à la direction longitudinale (X) de la rainure (21), le support de liaison (3) portant au moins un organe (10) constitutif de la liaison pivot propre à coopérer avec un organe (11) complémentaire porté par la structure (9).

14. Ensemble selon l'une quelconque des revendications 11 ou 12, notamment ensemble de porte coulissante ou analogue, **caractérisé en ce que** le panneau (2) et la structure (9) sont reliés l'un à l'autre par une liaison de roulement d'axe parallèle à la direction longitudinale (X) de la rainure (21), le support de liaison (3) portant au moins un organe de roulement propre à coopérer un organe de roulement complémentaire porté par la structure (9).

15. Procédé de fixation d'un support de liaison (3) selon l'une quelconque des revendications 1 à 10 sur un panneau (2) comportant une rainure (21) qui débouche en surface (26) du panneau par une ouverture (23), **caractérisé en ce qu'**il comprend des étapes dans lesquelles :
- on introduit l'extrémité (41) de la clavette (4) dans la rainure (21);
- on actionne les moyens de traction (6, 7 ; 8) de manière à placer et maintenir l'extrémité (41) de la clavette dans la position de verrouillage.

## Patentansprüche

1. Verbindungshalter (3), der dazu bestimmt ist, an einer Platte (2) befestigt zu werden, welche eine Nut (21) umfasst, die an der Oberfläche (26) der Platte über eine Öffnung (23) ausmündet, wobei dieser Verbindungshalter (3) einen Keil (4) umfasst, dessen eines Ende (41) dazu ausgelegt ist, in der Nut (21) aufgenommen zu werden, wobei das Ende (41) des Keils geeignet ist, mit wenigstens einer Haltefläche (25), die das Herausziehen des Endes (41) aus der Nut durch die Öffnung (23) behindert, zusammenzuwirken, umfassend Mittel (6, 7; 8) zum Ziehen des Keils (4), die geeignet sind, das Ende (41) des Keils, wenn es in der Nut (21) auf-genommen ist, in eine Verriegelungsposition zu bringen, in der das Ende (41) an der Haltefläche (25) zusammengedrückt wird, und darin zu halten, **dadurch gekennzeichnet, dass** das Ende (41) beim Übergang von einer Ruheposition, in der das Ende (41) in der Nut (21) ohne Interaktion mit deren Rändern aufgenommen ist, in die Verriegelungsposition an den Rändern der Nut (21) plastisch verformbar ist.

2. Verbindungshalter nach Anspruch 1, **dadurch gekennzeichnet, dass** in der Verriegelungsposition das Ende (41) des Keils (4) an zwei Halteflächen (25), die jeweils durch einen Seitenrand (24) der Nut (21) gebildet sind, zusammengedrückt wird, wobei wenigstens eine Haltefläche (25) gegenüber einer Mittelebene (π) der Platte (2) derart geneigt ist, dass sie sich der anderen Haltefläche (25) in Richtung der Öffnung (23) nähert.

3. Verbindungshalter nach einem der Ansprüche 1 oder 2, **dadurch gekennzeichnet, dass** die Zugmittel wenigstens eine Schraube (6), die geeignet ist, mit einer Gewindebohrung (46) des Keils (4) zusammenzuwirken, sowie Federmittel (7) zum Wegdrücken der Schraube (6) von der Platte (2) umfassen.

4. Verbindungshalter nach einem der Ansprüche 1 oder 2, **dadurch gekennzeichnet, dass** die Zugmittel wenigstens einen Exzenternocken (8) umfassen, der mit dem Keil (4) zusammenwirkt.

5. Verbindungshalter nach einem der vorstehenden Ansprüche, **dadurch gekennzeichnet, dass** er ein Profil (5) umfasst, das die Zugmittel (6, 7; 8) aufnimmt.

6. Verbindungshalter nach Anspruch 5, **dadurch gekennzeichnet, dass** der Keil (4) und das Profil (5) eine in einer Längsrichtung (X₃) des Verbindungshalters (3) langgestreckte Form aufweisen, wobei die Zugmittel (6, 7; 8) geeignet sind, an mehreren entlang der Längsrichtung (X₃) des Verbindungshalters (3) verteilten Abschnitten des Keils (4) eine Zugkraft (T) anzulegen.

7. Verbindungshalter nach einem der vorstehenden Ansprüche, **dadurch gekennzeichnet, dass** der Keil (4) ein erstes Ende (41) umfasst, das dazu bestimmt ist, in der Nut (21) aufgenommen zu werden, sowie ein zweites Ende (42), welches dazu bestimmt ist, mit den Zugmitteln (6, 7; 8) zusammenzuwirken.

8. Verbindungshalter nach Anspruch 7, **dadurch gekennzeichnet, dass** das erste Ende (41) des Keils (4) aus einem plastischen Werkstoff besteht, während das zweite Ende (42) des Keils (4) aus einem metallischen Werkstoff besteht.

9. Verbindungshalter nach Anspruch 7, **dadurch gekennzeichnet, dass** der Keil (4) einstückig ausgebildet ist und aus einem Werkstoff mit einem Elastizitätsmodul nahe demjenigen des die Haltefläche (25) bildenden Werkstoffes besteht, insbesondere aus Aluminium bei einer Haltefläche aus Glas, wobei das erste Ende (41) des Keils (4) Flügel (45) umfasst, die durch Kontakt mit den Rändern (24) der Nut (21) plastisch verformbar sind.

10. Verbindungshalter nach einem der vorstehenden Ansprüche, **dadurch gekennzeichnet, dass** er dazu bestimmt ist, an einer Platte (2), die wenigstens ein Substrat aus zerbrechlichem Material, insbesondere aus Glas umfasst, befestigt zu werden, wobei die Nut (21) wenigstens teilweise in dem Substrat aus zerbrechlichem Material ausgebildet ist.

11. Anordnung (1), umfassend eine Platte (2) und eine Struktur (9), die durch eine mechanische Verbindung miteinander verbunden sind, wobei die Platte (2) eine Nut (21) umfasst, die an der Oberfläche (26) der Platte über eine Öffnung (23) ausmündet, **dadurch gekennzeichnet, dass** sie einen Verbindungshalter (3) nach einem der vorstehenden Ansprüche umfasst, wobei der Verbindungshalter (3) mittels des Endes (41) des Keils (4), das in der Nut (21) aufgenommen ist und durch die Zugmittel (6, 7; 8) in der Verriegelungsposition gehalten wird, ohne Freiheitsgrad gegenüber der Platte (2) verriegelt ist.

12. Anordnung nach Anspruch 11, **dadurch gekennzeichnet, dass** sie wenigstens zwei Verbindungshalter (3) nach einem der Ansprüche 1 bis 10 umfasst, deren Enden (41) von Keilen (4) in der gleichen Nut (21) der Platte (2) aufgenommen sind.

13. Anordnung nach einem der Ansprüche 11 oder 12, insbesondere Tür-, Schützanordnung oder ähnliches, **dadurch gekennzeichnet, dass** die Platte (2) und die Struktur (9) durch eine Drehgelenkverbindung mit einer zur Längsrichtung (X) der Nut (21) parallel verlaufenden Achse miteinander verbunden sind, wobei der Verbindungshalter (3) wenigstens ein Organ (10), welches Bestandteil der Drehgelenkverbindung ist, umfasst, das geeignet ist, mit einem durch die Struktur (9) getragenen ergänzenden Organ (11) zusammenzuwirken.

14. Anordnung nach einem der Ansprüche 11 oder 12, insbesondere Schiebetüranordnung oder ähnliches, **dadurch gekennzeichnet, dass** die Platte (2) und die Struktur (9) durch eine Rollverbindung mit einer zur Längsrichtung (X) der Nut (21) parallel verlaufenden Achse miteinander verbunden sind, wobei der Verbindungshalter (3) wenigstens ein Rollorgan trägt, das geeignet ist, mit einem durch die Struktur (9) getragenen ergänzenden Rollorgan zusammenzuwirken.

15. Verfahren zur Befestigung eines Verbindungshalters (3) nach einem der Ansprüche 1 bis 10, an einer Platte (2), die eine Nut (21) umfasst, welche an der Oberfläche (26) der Platte über eine Öffnung (23) ausmündet, **dadurch gekennzeichnet, dass** es Schritte umfasst, bei denen:
- das Ende (41) des Keils (4) in die Nut (21) eingeführt wird,
- die Zugmittel (6, 7; 8) betätigt werden, um das Ende (41) des Keils in die Verriegelungsposition zu bringen und darin zu halten.

## Claims

1. Connection support (3) designed to be attached to a panel (2) comprising a groove (21) which opens onto the surface (26) of the panel via an opening (23), this connection support (3) comprising a key (4) of which one end (41) is suitable for being housed in the groove (21), the end (41) of the key being capable of interacting with at least one retention surface (25) forming an obstacle to the extraction of the end (41) from the groove through the opening (23), the connection support (3) comprising means (6, 7; 8) for pulling the key (4) that are suitable for placing and keeping the end (41) of the key, when it is housed in the groove (21), in a locking position in which the end (41) is in compression against the retention surface (25), **characterized in that** the end (41) can be deformed plastically against the edges of the groove (21) during the passage from a rest position, in which the end (41) is received in the groove (21) without interaction with the edges of the latter, to the said locking position.

2. Connection support according to Claim 1, **characterized in that**, in the locking position, the end (41) of the key (4) is in compression against two retention surfaces (25), each formed by a lateral edge (24) of the groove (21), at least one retention surface (25) being inclined relative to a mid-plane (π) of the panel (2) so as to come closer to the other retention surface (25) in the direction of the opening (23).

3. Connection support according to either one of Claims 1 and 2, **characterized in that** the pulling means comprise at least one screw (6) suitable for interacting with a tapped bore (46) of the key (4) and elastic means (7) for pushing the screw (6) away from the panel (2).

4. Connection support according to either one of Claims 1 and 2, **characterized in that** the pulling means comprise at least one eccentric cam (8) which interacts with the key (4).

5. Connection support according to any one of the preceding claims, **characterized in that** it comprises a section piece (5) which houses the pulling means (6, 7; 8).

6. Connection support according to Claim 5, **characterized in that** the key (4) and the section piece (5) are of elongate shape in a longitudinal direction (X₃) of the connection support (3), the pulling means (6, 7; 8) being capable of applying a pulling force (T) on several portions of the key (4) that are distributed in the longitudinal direction (X₃) of the connection support (3).

7. Connection support according to any one of the preceding claims, **characterized in that** the key (4) comprises a first end (41) designed to be housed in the groove (21) and a second end (42) designed to interact with the pulling means (6, 7; 8).

8. Connection support according to Claim 7, **characterized in that** the first end (41) of the key (4) is made of a plastic material, while the second end (42) of the key (4) is made of a metallic material.

9. Connection support according to Claim 7, **characterized in that** the key (4) is one-piece and made of a material with a modulus of elasticity close to that of the material making up the retention surface (25), notably of aluminium for a retention surface made of glass, the first end (41) of the key (4) comprising fins (45) that can be deformed plastically by contact with the edges (24) of the groove (21).

10. Connection support according to any one of the preceding claims, **characterized in that** it is designed to be attached to a panel (2) comprising at least one substrate made of fragile material, notably of glass, the groove (21) being made at least partially in the substrate made of fragile material.

11. Assembly (1) comprising a panel (2) and a structure (9) which are connected to one another via a mechanical connection, the panel (2) comprising a groove (21) which opens onto the surface (26) of the panel via an opening (23), **characterized in that** it comprises a connection support (3) according to any one of the preceding claims, the connection support (3) being locked with no degree of freedom relative to the panel (2) by means of the end (41) of the key (4) which is housed in the groove (21) and held in the locking position by the pulling means (6, 7; 8).

12. Assembly according to Claim 11, **characterized in that** it comprises at least two connection supports (3) according to any one of Claims 1 to 10, of which the ends (41) of keys (4) are housed in the same groove (21) of the panel (2).

13. Assembly according to either one of Claims 11 and 12, notably an assembly of a door, a gate or similar element, **characterized in that** the panel (2) and the structure (9) are connected to one another by a pivot connection with an axis parallel to the longitudinal direction (X) of the groove (21), the connection support (3) supporting at least one member (10) forming the pivot connection suitable for interacting with a complementary member (11) supported by the structure (9).

14. Assembly according to either one of Claims 11 and 12, notably an assembly of a sliding door or similar element, **characterized in that** the panel (2) and the structure (9) are connected to one another via a rolling connection with an axis parallel to the longitudinal direction (X) of the groove (21), the connection support (3) supporting at least one rolling member suitable for interacting with a complementary rolling member supported by the structure (9).

15. Method for attaching a connection support (3) according to any one of Claims 1 to 10, to a panel (2) comprising a groove (21) which opens onto the surface (26) of the panel via an opening (23), **characterized in that** it comprises steps in which:
- the end (41) of the key (4) is inserted into the groove (21);
- the pulling means (6, 7; 8) are actuated so as to place and hold the end (41) of the key in the locking position.
